(19) Europäisches Patentamt
European Patent Office
Office européen des brevets

(11) **EP 2 243 754 B1**

(12) **EUROPÄISCHE PATENTSCHRIFT**

(45) Veröffentlichungstag und Bekanntmachung des Hinweises auf die Patenterteilung:
**24.10.2012 Patentblatt 2012/43**

(51) Int Cl.:
***C04B 7/345*** (2006.01)

(21) Anmeldenummer: **10003318.2**

(22) Anmeldetag: **27.03.2010**

(54) **Verfahren zur Herstellung eines belithaltigen Bindemittels**

Method for producing a binding agent containing belite

Procédé de fabrication d'un liant contenant de la bélite

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.04.2009 DE 102009018632**

(43) Veröffentlichungstag der Anmeldung:
**27.10.2010 Patentblatt 2010/43**

(73) Patentinhaber: **Karlsruher Institut für Technologie 76131 Karlsruhe (DE)**

(72) Erfinder:
• **Beuchle, Günter**
  **76185 Karlsruhe (DE)**
• **Stemmermann, Peter**
  **76149 Karlsruhe (DE)**
• **Schweike, Uwe**
  **76185 Karlsruhe (DE)**
• **Garbev, Krassimir**
  **76344 Eggenstein-Leopoldshafen (DE)**

(74) Vertreter: **Gärtner, Stephan**
**Innovationsmanagement**
**Postfach 3640**
**76021 Karlsruhe (DE)**

(56) Entgegenhaltungen:
**EP-A1- 1 719 741      WO-A2-2007/017142**

• **K.GARBEV: "Struktur, Eigenschaften und quantitative Rietveldanalyse von hydrothermal kristallisierten Calciumsilikathydraten (CSH Phasen)." FORSCHUNGSZENTRUM KARLSRUHE WISSENSCHAFTLICHE BERICHTE, Bd. FZKA 6877, 2004, XP002585876 Karlsruhe**
• **K.GARBEV,B.GASHAROVA,G.BEUCHLE, S.KREISZ,P. STEMMERMANN: "First Observation of alpha-Ca2[SiO3(OH)]-Ca6[Si2O7] [SiO4](OH)2 Phase Transformation upon Thermal Treatment in Air" J.AM.CERAM.SOC., Bd. 91, Nr. 1, 2008, Seiten 263-271, XP002585877**
• **E.HIDEKI ISHIDA, N.ISU: "Innovative Processing for Cement Materials" MRS BULLETIN, November 2001 (2001-11), Seiten 895-898, XP002585885**
• **N.STEVULOVA,M.BALINTOVA,J.BRIANCIN, Z.SZEGH YOVA: "Mechanochemical Synthesis of Belite Cements from coal Fly Ash/Portlandite Mixture" CHEMISTRY FOR SUSTAINABLE DEVELOPMENT, Bd. 15, 2007, Seiten 225-229, XP002585886**
• **A.GUERRERO,S.GONI,I.CAMPILLO, A.MORAGUES: "Belite Cement Clinker from Coal Fly Ash of High Ca Content Optimization of Synthesis Parameters" ENVIRON.SCI.TECHNOL., Bd. 38, 2004, Seiten 3209-3213, XP002585887**
• **K.SASAKI,T.MASUDA,H.ISHIDA,T,MITSUDA: "Synthesis of Calcium Silicate Hydrate with Ca/Si=2 by Mechanochemical Treatment" J.AM.CERAM.SOC., Bd. 80, Nr. 2, 1996, Seiten 472-476, XP002585888**

**Beschreibung**

Die Erfindung betrifft ein Verfahren zur Herstellung eines belithaltigen Bindemittels, das reaktives Dicalcium-Silikat wie z. B. $\beta$-$C_2S$ Belit enthält und hydraulisch aktiv ist, d. h. mit Wasser und unter Wasser aushärtet.

In diesem Dokument wird die übliche *Zement-Notation* verwendet, bei der C für CaO, S für $SiO_2$, A für $Al_2O_3$ und H für $H_2O$ stehen. In dieser Notation wird z. B. das $\beta$-Dicalcium-Silikat *Belit* durch $\beta$-$C_2S$ dargestellt, da dessen Molverhältnis Ca:Si ein Wert von 2:1 aufweist, was in herkömmlicher Notation 2[CaO]·[SiO$_2$]= Ca$_2$SiO$_4$ entspricht.

Belit-Zemente sind aus der Zementtechnik bekannt und werden durch das herkömmliche Verfahren zur Zementklinkerproduktion für bestimmte Anwendungen hergestellt. Sie zeichnen sich besonders durch ihre niedrige Hydratationswärme und ihre hohe Endfestigkeit aus. Daher werden sie bevorzugt zur Herstellung massiver Bauteile wie z.B. beim Staudammbau eingesetzt. Allerdings sind bisherige Bindemittel auf Belitbasis reaktionsträge und zeigen daher eine geringe Frühfestigkeit, wodurch der Baufortschritt erheblich verzögert wird. Ein breiterer Einsatz an Stelle von Portlandzement ist bisher nicht möglich, obwohl dies aus Gründen des Klimaschutzes wünschenswert wäre, da die spezifische $CO_2$-Emission von Belit niedriger ist.

Die Herstellung von belithaltigen Bindemitteln ist ähnlich energieintensiv wie die Herstellung von Portlandzement. Die Rohstoffe Kalk und Silikat werden gemahlen und in einem molaren Verhältnis Ca:Si von etwa 2 vermischt. Anschließend wird das Produkt zunächst bei ca. 800 °C entsäuert und anschließend bei ca. 1250 °C im Drehrohrofen gebrannt. Nach dem Abkühlen wird der entstandene Belit-Klinker gemeinsam mit Zumahlstoffen vermahlen.

K. Garbev, Struktur, Eigenschaften und quantitative Rietveldanalyse von hydrothermal kristallisierten Calciumsilikathydraten (C-S-H-Phasen), Wiss. Bericht des Forschungszentrums Karlsruhe, FZKA 6877, Kap. 8., S. 178-87, 2004, beschreibt die hydrothermale Behandlung von Zementstein, wobei das dort eingesetzte Ausgangsmaterial Larnit ($\beta$-$C_2SH$) enthält, wie es für einen Zement des Typs CEM IIB-S üblich ist. Dieser Zement wird hydratisiert, also mit Wasser vermischt und zur Reaktion gebracht, um Zementstein zu erhalten. Dieser Zementstein weist als einzige primäre Klinkerphase nicht hydratisierten Larnit auf, d.h. Reste des Ausgangsmaterials. Nach der anschließend bei 150°C durchgeführten hydrothermalen Reaktion sind noch Reste des Ausgangsmaterials bestimmbar, die bei höheren Behandlungstemperaturen, bei denen der Reaktionsumsatz höher ist, nicht mehr nachgewiesen werden können.

Aus H. Ishida, S. Yamazaki, K. Sasaki, Y. Okada, T. Mitsuda, $\alpha$-Dicalcium Silicate Hydrate: Preparation, Decomposed Phase, and Its Hydration, J. Am. Ceram. Soc. 76, S. 1707-1712, 1993, ist bekannt, dass $\alpha$-Dicalcium-Silikat-Hydrat $\alpha$-$C_2SH$ bei 200 °C durch eine zweistündige hydrothermale Behandlung von gebranntem Kalk CaO und Kieselsäure für Laborsynthesen (Reinheitsgrad p.a.) entsteht. Im Temperaturbereich von 390-490 °C wandelt sich $\alpha$-$C_2SH$ in verschiedene $C_2S$-Modifikationen um, die bei weiterer Erhitzung auf 920-960 °C in die $\alpha'_L$-Phase übergehen und beim Abkühlen $\beta$-$C_2S$ bilden. Nachteilig hieran ist die Verwendung von wegen ihrer hohen Reaktivität teurer Kieselsäure.

Neuere Entwicklungen setzen als Ausgangsstoff bereits entsäuerte Reststoffe wie Altbaustoffe oder Flugaschen ein. Altbaustoffe stammen aus der Aufbereitung von zementhaltigen Bindemitteln in Baustoffen, Altbetonen und -zementen. Insbesondere die feineren Kornfraktionen aus dieser Aufbereitung können derzeit nicht verwertet werden, eignen sich aber für diesen Prozess hervorragend.

In K. Garbev, B. Gasharova, G. Beuchle, S. Kreisz und P. Stemmermann, J. Am. Ceram. Soc. 91, S. 263-271, 2008 wird eine Umwandlung von $\alpha$-$C_2SH$ in Dellait bei 340-400 °C und anschließend in $\alpha'_L$-$C_2S$ bei 900 °C beschrieben. Beim Abkühlen bildet sich $\beta$-$C_2S$.

Gemäß der WO 2007/017142 werden die entsäuerten Ausgangsstoffe gemahlen und so abgemischt, dass eine Mischung mit einem molaren Verhältnis Ca/Si zwischen 1,5:1 und 2,5:1 vorliegt; ein eventuelles CaO-Defizit muss durch die Zugabe von Branntkalk oder Kalkmilch ausgeglichen werden. Durch Impfen des Ausgangsmaterials mit Kristallisationskeimen aus $\alpha$-Ca$_2$[HSiO$_4$](OH) und anschließender hydrothermaler Behandlung bei ca. 200 °C entsteht ein Zwischenprodukt, das $\alpha$-Ca$_2$SiO$_4$(OH)$_2$ enthält. Nach Filtration und Trocknung wird dieses Zwischenprodukt bei Brenntemperaturen von 600 °C bis 900 °C in ein Belit enthaltendes Bindemittel umgewandelt und anschließend gemahlen. Nachteilig hieran ist das Erfordernis von zwei thermischen Behandlungsstufen (hydrothermal und Brennen). Das mit diesem Verfahren hergestellte Produkt ist ähnlich reaktionsträge wie das im Drehrohrofen hergestellte Material.

Ausgehend hiervon ist es die Aufgabe der vorliegenden Erfindung, ein Verfahren zur Herstellung eines belithaltigen Bindemittels vorzuschlagen, das die genannten Nachteile und Einschränkungen nicht aufweist.

Insbesondere soll ein Verfahren zur Herstellung eines belithaltigen hydraulischen Bindemittels angegeben werden, wobei die Reaktivität des Produktes derart hoch sein soll, dass das Produkt wie Portlandzement eingesetzt werden kann. Ebenso soll die Anzahl der Verfahrensschritte und der spezifische Energiebedarf in der Herstellung gesenkt werden.

Diese Aufgabe wird durch die Verfahrensschritte des Patentanspruchs 1 gelöst. Die Unteransprüche beschreiben jeweils vorteilhafte Ausgestaltungen der Erfindung.

Erfindungsgemäß erfolgt eine nicht-thermische Entwässerung von Calcium-Silikaten wie $\alpha$-$C_2SH$ aus zementhaltigen Materialien oder Afwillit zu einem Zwischenprodukt, aus dem durch Reaktivmahlen $\beta$-$C_2S$ unter Vermeidung von energieintensiver Heizung, von Kohlendioxidemissionen und von unerwünschten Nebenreaktionen, z. B. Entstehung von Freikalk, gebildet wird. Die niedrige Mahltemperatur ist für die Reaktivität des Produkts ausschlaggebend.

Das erfindungsgemäße Verfahren setzt als Rohstoffe bereits entsäuerte Calciumträger und silikatische Rohstoffe ein, worin höchstens 50 %, bevorzugt bis zu 33,3 %, der Silizium-Atome durch Aluminium-Atome ersetzt sind. Damit wird auch der Einsatz von Reststoffen wie Altbeton oder Flugaschen möglich. Die in der DE 10 2005 037 771 B4 beschriebene hydrothermale Synthese kann zur Herstellung des Calcium-Silikat-Zwischenprodukts eingesetzt werden.

Die Rohstoffe werden gemäß Verfahrensschritt a) gemahlen und so abgemischt, dass ein Einsatzstoff mit einem definierten molaren Verhältnis Ca/(Si + Al) von 1,5:1 bis 2,5:1, bevorzugt von 1,9:1 bis 2,1:1 vorliegt. Hierbei werden nur die unter den hydrothermalen Bedingungen in Lösung gehenden Komponenten für die Berechnung berücksichtigt; beim Einsatz von Mischungen, z. B. Altbaustoffen, lösen sich bevorzugt die zementhaltigen Anteile. Eventuell enthaltener modaler Kalk ($CaCO_3$), modales Calciumsulfit ($CaSO_3$) oder modales Calciumsulfat ($CaSO_4$) sind nicht reaktiv und werden bei der Berechnung daher nicht berücksichtigt. Ein CaO-Defizit muss durch Zugabe von Branntkalk oder Kalkmilch, z. B. aus Reststoffen, ausgeglichen werden.

Durch die Zugabe von Wasser und eine hydrothermale Behandlung gemäß Verfahrensschritt b) bei einer Temperatur von 120 °C bis 250 °C, insbesondere von 150 °C bis 200 °C, entsteht ein Zwischenprodukt, das ein oder mehrere Calcium-Silikat-Hydrate mit niedermolekularen Silikateinheiten wie Monomeren oder Dimeren, die Silanol-Gruppen tragen, z.B. $\alpha$- $Ca_2[HSiO_4](OH)$ oder Afwillit, enthält. Durch die Wahl des molaren Ca:Si-Verhältnisses und eventuell, wie in der DE 10 2005 037 771 B4 beschrieben, durch die Zugabe von Kristallisationskeimen werden Calcium-Silikat-Phasen mit niedermolekularen, insbesondere monomeren oder dimeren Silikat-Einheiten, die Silanol-Gruppen tragen, hergestellt.

Dann wird das Zwischenprodukt gemäß Verfahrensschritt c) entweder pur oder gemeinsam mit anderen silikathaltigen Materialien in einer Mühle vermahlen (*Reaktionsmahlen*), wobei unter Reaktion und Entwässerung, aber ohne zusätzliche Heizung, ganz oder teilweise Belit, $\beta$-$Ca_2SiO_4$, eine hydraulisch reaktive Phase, entsteht. Das ansonsten erforderliche Brennen des Zwischenproduktes entfällt. Das belithaltige Bindemittel ist hoch reaktiv. Eine vollständige Umsetzung mit Wasser wurde in 3 Tagen beobachtet.

Belit entsteht im Mahlschritt dann, wenn die Beanspruchung zwischen zwei Festkörperoberflächen vorwiegend durch Druck-und Scherkräfte bestimmt wird. Unter diesen Bedingungen werden oberflächennahe Bereiche der beanspruchten Partikel unter der Mahlwirkung verändert. Obwohl nach Heegn, Mühlen als Mechanoreaktoren, Chemie Ingenieur Technik 73, 1529, 2001, eine konsistente Charakterisierung von Mühlen und Mahlvorgängen nicht möglich ist, lässt sich die gewünschte Kraftwirkung mit Beanspruchungsgeschwindigkeiten bis zu 5 m/s in verschiedenen Mühlentypen erreichen. Die durch Reibung dominierte Reaktionsmahlung z. B. in einer Scheibenschwingmühle oder einer Wälzmühle erfolgt ohne zusätzliche Erwärmung. Durch die beim Mahlen entstehende Reibungswärme werden bei einer Mahldauer von 5 bis 30 min, Temperaturen von 100 °C bis 200°C, bevorzugt von 120 °C bis 150 °C, insbesondere um 130 °C erreicht. Daher ist eine Temperaturregelung über den Bereich von 100 °C bis 200 °C sinnvoll. In diesem Temperaturbereich erfolgt nachweislich eine Umsetzung des Ausgangsmaterials in Belit.

Für eine effektive Umsetzung müssen vor dem Reaktionsmahlen Korngröße, Kornverteilung und chemische Zusammensetzung des Aufgabematerials eingestellt werden. Soweit erforderlich, werden dem hydrothermalen Zwischenprodukt weitere Reaktionspartner wie Ca- oder Si-haltige Feststoffe zur Einstellung eines geeigneten, molaren Ca/Si-Verhältnisses oder reaktionsbeeinflussende Stoffe, darunter auch Wasser zugefügt. Als geeignete Zusatzstoffe eignen sich reiner Quarzsand, aber auch verunreinigte Sande von geringer Qualität, etwa mit sehr geringer Korngröße.

In einer besonderen Ausgestaltung wird das erhaltene Produkt im Anschluss an Schritt c) einer thermischen Behandlung zwischen 300 °C und 600 °C unterzogen wird. Hierbei bilden sich folgende Substanzen:

- Bei einer thermischen Behandlung zwischen 300 und 450 °C bildet sich gut kristallines $\beta$-$Ca_2SiO_4$,
- Bei einer thermischen Behandlung zwischen 451 und 600 °C bildet sich neben gut kristallinem $\beta$-$Ca_2SiO_4$ auch $a'_L$-$Ca_2SiO_4$.

Das erfindungsgemäße Verfahren weist insbesondere die folgenden Vorteile auf.

Das erfindungemäße belithaltige Bindemittel ersetzt herkömmliche zementartige Bindemittel oder kann diesen zugemischt werden. Dadurch kommt es zu einer Verminderung des Energieaufwandes und der Kohlendioxidemission, da das der Erfindung zugrunde liegende Verfahren bei deutlich niedrigeren Verfahrenstemperaturen als die herkömmliche Zementklinkerherstellung arbeitet und das eingesetzte Material im Gegensatz zur herkömmlichen Zementklinkerherstellung nicht decarbonatisiert werden muss.

Eine Decarbonatisierung kann lediglich bei Einsatz von $CaCO_3$ oder $CaCO_3$-haltigen Mischungen, z.B. verwitterter Zementstein also Altbaustoff, als Ausgangsstoff sinnvoll sein. Dazu wird der Rohstoff bei ca. 900°C unter $CO_2$-Abgabe in CaO überführt.

Belit-Zement kann bislang entweder nur auf herkömmlichem Wege (sog. *Klinker-Prozess*) oder durch thermische Behandlung von hydrothermalen Vorstufen hergestellt werden. Durch thermische Behandlung erfolgt ein Partikelwachstum, was unvermeidbar zu einer stark abnehmenden Reaktivität führt. Das erfindungsgemäße Verfahren ermöglicht demgegenüber die Herstellung eines hoch reaktiven, mit Portlandzement vergleichbaren Bindemittels mit niedriger Reaktionswärme und hoher Frühfestigkeit.

Das erfindungsgemäße Verfahren erlaubt die energieeffiziente und Kohlendioxidemissionen vermeidende Wiederverwertung von bisher zu deponierenden Reststoffen. Durch den Ersatz von herkömmlichem, zementärem Bindemittel wird die Einsparung von Rohstoffen durch Einsatz von Reststoffen möglich.

Die Erfindung wird im Folgenden anhand von zwei Ausführungsbeispielen im Labor-Maßstab und den Figuren erläutert. Hierbei zeigen die Figuren im Einzelnen:

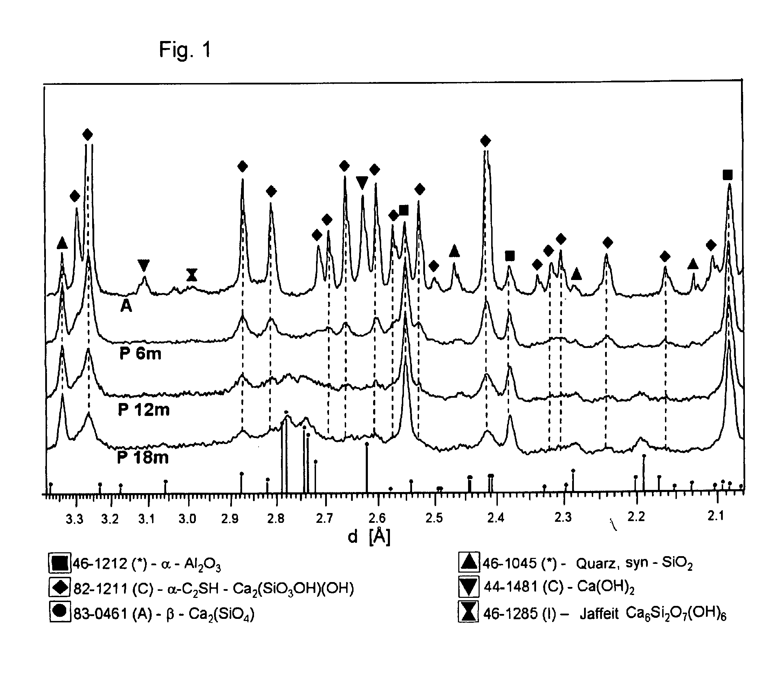

Fig. 1 Röntgendiffraktogramme des Zwischenprodukts (A) nach hydrothermaler Herstellung und der Produkte nach dem Mahlprozess. P 6m: Mahldauer 6 min; P 12m: Mahldauer 12 min; P 18m: Mahldauer 18 min. Die Bildung von $\beta$-$C_2S$ (Belit) im Laufe des Mahlprozesses ist durch die Re- flexe bei 0,278 nm, 0,274 nm, 0,219 nm sowie durch die insgesamt sehr gute Übereinstimmung des Röntgenprofils mit der ICDD - Karte 83-0461 nachgewiesen [d = Netz- ebenenabstand, 1 Å = 0,1 nm].

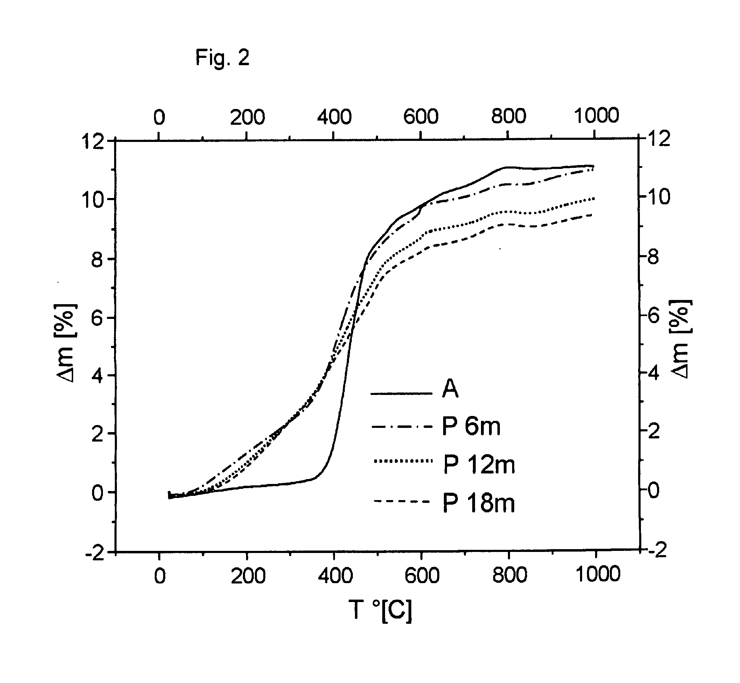

Fig. 2 Gewichtsverlust $\Delta m(\%)$ im Temperaturbereich von 25 °C bis 1000 °C des Zwischenprodukts (A) nach hydrotherma- ler Herstellung und der Produkte nach dem Mahlprozess. P 6m: Mahldauer 6 min.; P 12m: Mahldauer 12 min.; P 18m: Mahldauer 18 min.

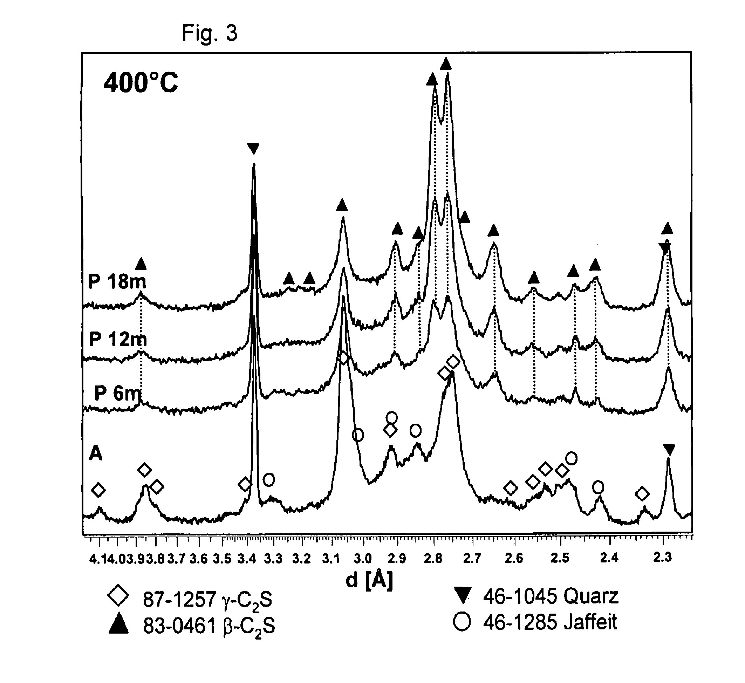

Fig. 3 Röntgendiffraktogramme des Zwischenprodukts (A) und der gemahlenen Produkte (P 6m, P 12m, P 18m) nach einer thermischen Behandlung bei 400°C, wobei das thermisch behandelte Zwischenprodukt (A) aus $\gamma$-$C_2S$ (erkennbar an der hohen Intensität des Reflexes bei 0,305nm) besteht, während die gemahlenen Produkte ausschließlich $\beta$-$C_2S$ (Belit) enthalten [d = Netzebenenabstand, 1 Å = 0,1 nm]. Die Kristallinität des $\beta$-$C_2S$ steigt mit steigender Mahldauer. Die Probe P 18m zeigt nach der Behandlung bei 400°C eine perfekte Übereinstimmung mit der ICDD - Karte 83-0461.

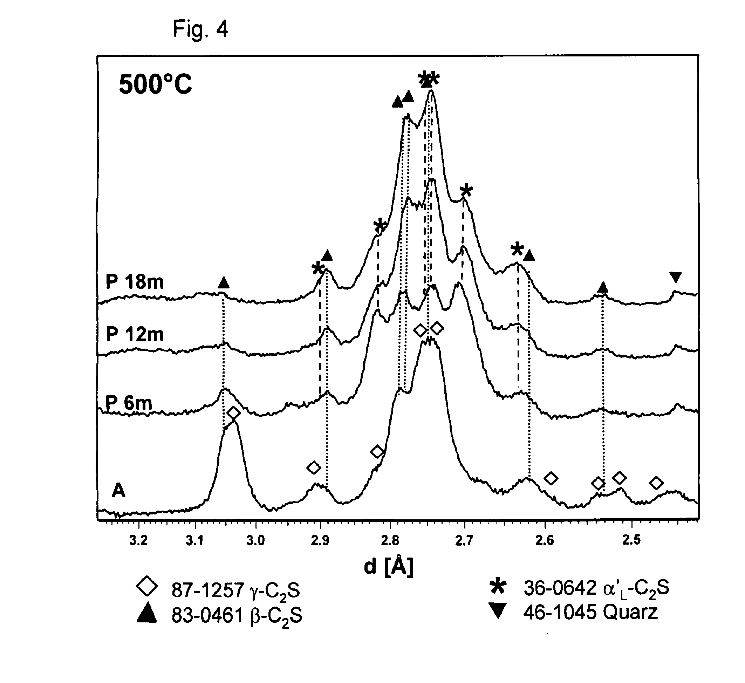

Fig. 4 Röntgendiffraktogramme des Zwischenprodukts (A) und der gemahlenen Produkte (P 6m, P 12m, P 18m) nach einer thermischen Behandlung bei 500°C. Das behandelte Zwi- schenprodukt (A) besteht aus einer Mischung aus $\gamma$-$C_2S$ und $\beta$-$C_2S$. Die gemahlenen Produkte zeigen kein $\gamma$-$C_2S$ (erkennbar an der fehlenden Intensität des Reflexes bei 0,305 nm). Diese enthalten neben $\beta$-$C_2S$ (Belit) auch $\alpha$'L-$C_2S$ (erkennbar am Reflex bei 0.27nm [d = Netzebe- nenabstand, 1 Å = 0,1 nm].

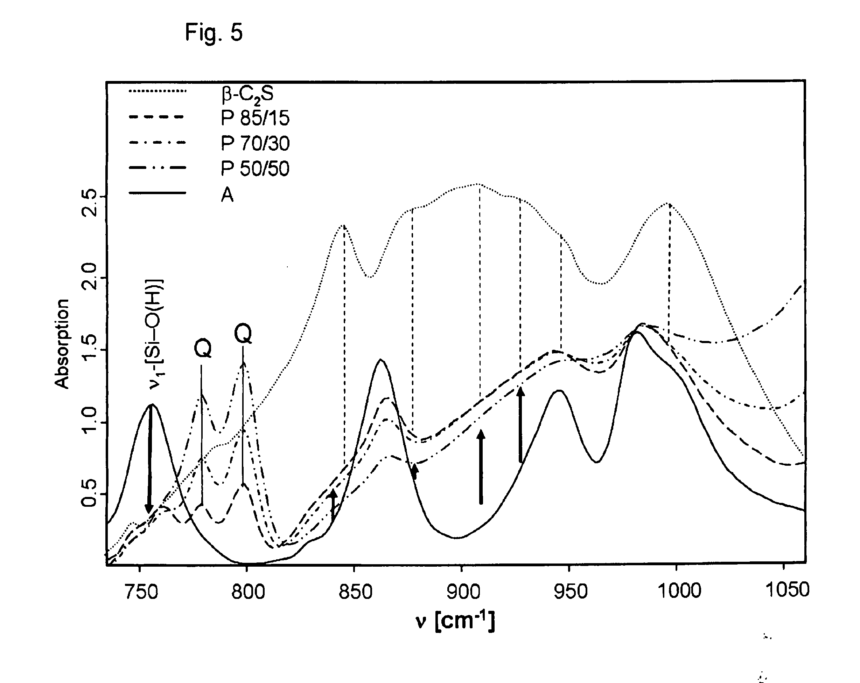

Fig. 5 Infrarot-Spektren im Bereich der Si-O-Streckschwingun- gen des Zwischenprodukts (A) sowie der gemahlenen Pro- dukte mit Zwischenprodukt/Sand-Verhältnissen von 50/50 (P 50/50), 70/30 (P 70/30) und 85/15 (P 85/15) jeweils 12 min. gemahlen. Zusätzlich ist das IR-Spektrum von reinem Belit $\beta$-$C_2S$ als punktierte Linie dargestellt. Die mit einem "Q" gekennzeichneten Banden sind Quarz zugeordnet. Die Pfeile bezeichnen die Entwicklung zu- sätzlicher Banden bzw. die Intensitätsabnahme bestimm- ter Banden, insbesondere derjenigen mit einer Proton- beteiligung [v = Schwingungsfrequenz in Wellenzahlen].

**Ausführungsbeispiel 1**

Im vorliegenden zweistufigen Herstellungsverfahren wurde zunächst ein Zwischenprodukt hergestellt, das anschließend zum belithaltigen Bindemittel umgewandelt wurde.

Das Zwischenprodukt wurde aus $Ca(OH)_2$, Quarz, 1M NaOH sowie $H_2O$ in einem Stahlautoklaven hydrothermal bei 190 °C über 6 Std. hergestellt und anschließend getrocknet. Als Zwischenprodukt wurde eine Mischung aus $\alpha$-$C_2SH$ und Nebenbestandteilen erhalten. Aus einer quantitativen Röntgendiffratometrie ergab sich die Zusammensetzung zu 80 Gew.% $\alpha$-$C_2SH$, ca. 7 Gew.% Jaffeit, 4 Gew.% Quarz sowie geringe Mengen an Portlandit und $CaCO_3$ (siehe **Tab. 1**).

Je 26 g dieses Gemisches wurden in einer Scheibenschwingmühle für 6 Minuten, 12 Minuten bzw. 18 Minuten vermahlen. Dadurch bildeten sich die Produkte, die in **Tab. 1** entsprechend ihrer Mahldauer bezeichnet wurden.

**Tab. 1:** Phasenzusammensetzung aus quantitativer Rietveld-Analyse (Alle Angaben in Gew.%, die Standardabweichungen sind in Klammern angegeben.)

| Phase | Zwischenprodukt | Produkt 6 Min | Produkt 12 min | Produkt 18 min |
|---|---|---|---|---|
| amorph | 1,2(8) | 54,7(5) | 62,8(3) | 66,0(3) |
| Quarz | 3,9(1) | 2,9(1) | 3,8(3) | 3,7(3) |
| $\alpha$-$C_2SH$ | 80,5(2) | 35,4(2) | 20,4(1) | 11,8(2) |

(fortgesetzt)

| Phase | Zwischenprodukt | Produkt 6 Min | Produkt 12 min | Produkt 18 min |
|---|---|---|---|---|
| Jaffeit | 6,6(2) | 2,7(2) | 2,5(3) | 3,1(3) |
| Portlandit | 7,2(1) | - | - | - |
| Calcit | 0,6(1) | - | - | - |
| Belit | - | 4,3(2) | 10,4(2) | 15,4(8) |

**Phasenbestand und Röntgenbeugung**

**Fig. 1** zeigt ein Röntgendiffraktogramm des Zwischenprodukts A, das von Reflexen des $\alpha$-$C_2SH$ (Identifikation nach *International Centre for Diffraction Data (ICDD)* Karte Nr. 82-1211) dominiert wird, sowie die Röntgendiffraktogramme der Produkte P 6m, P 12m und P 18m, wobei der Hauptbestandteil $\alpha$-$C_2SH$ mit zunehmender Mahldauer abnimmt. Portlandit (ICDD Karte Nr. 44-1481) ist nach 6 Minuten Mahlen röntgenographisch nicht mehr nachweisbar.

Weiterhin zeigt **Fig. 1** neu entstandene Reflexe bei 0,278 nm, 0,274 nm und 0,219 nm. Diese werden eindeutig den Reflexen (200, 022), (-121, -103) und (031) von $\beta$-$Ca_2SiO_4$, Belit, (ICDD -Karte Nr. 83-0461) zugeordnet. Die Intensität dieser Reflexe steigt mit zunehmender Mahldauer deutlich. Dem entspricht die mit quantitativer Rietveldanalyse bestimmte Zunahme des Belits von ca. 4 Gew.% (6 Minuten) bis 15 Gew.% (18 Minuten) Mit zunehmender Mahldauer nimmt außerdem der amorphe Anteil zu.

**Thermogravimetrie und DTA**

Das Zwischenprodukt und die Mahlprodukte zeigen deutliche Unterschiede im thermischen Verhalten. **Fig. 2** gibt den prozentualen Gewichtsverlust $\Delta m(\%)$ der Proben als Funktion der Temperatur im Bereich von 25 °C bis 1000 °C wieder. Der Hauptgewichtsverlust des Zwischenproduktes A erfolgt zwischen 400 °C und 600 °C, was der Entwäs-serung des Hauptbestandteils $\alpha$-$C_2SH$ entspricht. Alle Mahlprodukte P 6m, P 12m und P 18m weisen dagegen einen verminderten Gewichtsverlust in diesem Temperaturbereich auf. Zusätzlich ist eine Verlagerung des Gewichtsverlustmaximums zu niedrigeren Temperaturen in den Bereich oberhalb von 100 °C erkennbar. Dies belegt eine Umstrukturierung des Wassergehalts, vor allem im $\alpha$-$C_2SH$, von Hydroxyl-OH zu molekularem $H_2O$ als Folge des Mahlens. Der gesamte Gewichtsverlust vermindert sich mit Zunahme der Mahldauer von 11,1 % im Zwischenprodukt A, über 11 % im 6 Min.-Produkt P 6m, 10 % im 12 Min.-Produkt P 12m bis 9.4 % im 18 Min.-Produkt P 18m.

Als Folge des Mahlprozesses findet eine partielle Entwässerung statt, was zu einer Umwandlung von $\alpha$-$C_2SH$ in $\beta$-$C_2S$ führt. Ein Vergleich der Differenzthermoanalysen zeigt, dass die Temperatur der vollständigen Umwandlung des Zwischenproduktes in $\beta$-$C_2S$ in Abhängigkeit von der Mahldauer steht. So liegt sie für das Zwischenprodukt bei 640 °C und für die gemahlenen Produkte bei 590 °C.

**Wärmeleitungskalorimetrie**

Durch Wärmeleitungskalorimetrie ließ sich für das entstandene Mahlprodukt bei der Hydratation eine charakteristische Nettowärmefreisetzung nachweisen. Hierbei kommt es in den ersten Sekunden nach der Zudosierung von Wasser zur Freisetzung von Benetzungswärme. Nach einer Periode sehr geringer Nettowärmefreisetzung, die als Ruheperiode bezeichnet wird, beginnt der eigentliche Hydratationsprozess. Dabei steigt die Nettowärmefreisetzung erst exponentiell, dann degressiv an und erreicht nach 5 bis 10 Stunden ein Maximum. In den folgenden Stunden sinkt die Nettowärmefreisetzung kontinuierlich bis zur asymptotischen Annäherung an die Null-Linie.

**Sinterung des Mahlproduktes**

Das Mahlprodukt lässt sich durch eine Wärmebehandlung weiter modifizieren, wobei durch Änderung der Korngrößenverteilung des Belits dessen Reaktivität beeinflusst wird. Das 18 Min.-Produkt wurde hierzu in einer Heizkammer aufgeheizt, von Raumtemperatur bis 1000 °C mit 10 K/min, und jeweils bei verschiedenen Haltetemperaturen röntgenographisch, von Raumtemperatur bis 300 °C alle 10 °C, ab 300 °C alle 50 °C, untersucht.

In allen Diffraktogrammen von Raumtemperatur bis zu 600 °C ist Belit vorhanden. Ab 400 °C nimmt die röntgenographisch bestimmte Belitkristallit-Größe zu. Von 500 °C bis 1000 °C tritt $\alpha'_L$-$C_2S$ auf. Nach dem Abkühlen ist jedoch Belit die stabile Phase.

Zusätzlich wurden das Zwischenprodukt sowie die Produkte P6m, P12m und P18m bei 400 °C und 500 °C jeweils 5 Std. aufgeheizt und schließlich abgekühlt. Anschließend wurden die Proben mit Hilfe von Röntgenbeugung untersucht. Nach dem Aufheizen bei 400 °C (und Abkühlen bis Raumtemperatur) besteht das Zwischenprodukt (A in **Fig. 3**) hauptsächlich aus $\gamma$-Ca$_2$SiO$_4$ ($\gamma$-C$_2$S, ICDD Karte Nr. 87-1257). Nebenbestandteile sind Quarz und Jaffeit. Somit ist das bei 400 °C behandelte Zwischenprodukt nicht hydraulisch reaktiv. Die Produkte P6m, P12m und P18m enthalten nach 400 °C-Behandlung dagegen mit steigender Mahldauer zunehmend $\beta$-Ca$_2$SiO$_4$ ($\beta$-C$_2$S, ICDD Karte Nr. 83-0461) (**Fig. 3**). Insbesondere besteht die Probe P18m ausschließlich aus gut kristallinem $\beta$-C$_2$S. Diese Beobachtung beweist, dass eine Stabilisierung der hydraulisch reaktiven Phase $\beta$-C$_2$S durch den Mahlprozess und durch eine anschließende thermische Behandlung bei 400 °C stattfindet. Mahlung und anschließende Temperaturbehandlung erlauben eine Steuerung der Kristallinität des Produktes.

Nach dem Aufheizen auf 50 0°C (und Abkühlen auf Raumtemperatur) besteht das Zwischenprodukt (in **Fig. 4** als A bezeichnet) aus einer Mischung von $\gamma$-Ca$_2$SiO$_4$ und $\beta$-Ca$_2$SiO$_4$. Die bei 500 °C behandelten Produkte P6m, P12m und P18m enthalten dagegen kein $\gamma$-Ca$_2$SiO$_4$. Nachgewiesen wird dies durch die starke Abnahme der Intensität des Reflexes bei d = 0,305 nm (indiziert als 1 3 0) in den Diffraktogrammen der gemahlenen Produkte. Mit steigender Mahldauer, weisen die auf 500 °C aufgeheizten Proben zunehmend Reflexe von $\beta$-Ca$_2$SiO$_4$ auf. Zusätzlich treten neue Reflexe auf, die zu einer bei Raumtemperatur stabilisierten $\alpha$'L-Ca$_2$SiO$_4$ Modifikation (bezeichnet als $\alpha$'L-C$_2$S) gehören.

Kennzeichnend für diese Phase ist der Reflex bei d = 0,270nm (indiziert als 130). Die $\alpha$'L-Ca$_2$SiO$_4$ Modifikation ist normalerweise nur bei hohen Temperaturen stabil (675 °C - 1177 °C). Damit $\alpha$'L-C$_2$S auch bei Raumtemperatur stabil bleibt, muss es entweder durch den strukturellen Einbau von fremden Ionen oder durch rasches Abkühlen von 1300 °C auf Raumtemperatur stabilisiert werden. Die Untersuchung der zunächst bei Raumtemperatur gemahlenen Produkte P6m, P12m und P18m, die anschließend auf 500 °C aufgeheizt wurden zeigt, dass eine Stabilisierung von $\alpha$'L-C$_2$S durch den Mahlprozess erfolgt.

**Ausführungsbeispiel 2**

In einem weiteren Ausführungsbeispiel wurde das Zwischenprodukt, das wie in Ausführungsbeispiel 1 hergestellt wurde, zusammen mit unterschiedlichen Mengen an Sand für 12 min in einer Scheibenschwingmühle behandelt. Hierbei wurden drei verschiedene Zwischenprodukt/Sand-Gewichtsverhältnisse untersucht: 50/50, 70/30 und 85/15.

Das Röntgendiffraktogramm des Zwischenprodukts zeigt, dass der Hauptbestandteil $\alpha$-C$_2$SH ist. Die Röntgendiffraktogramme der Produkte zeigen neben Quarz als Hauptbestandteil eine deutliche Abnahme des $\alpha$-C$_2$SH. Neu entstandene Reflexe bei 0,278 nm, 0,274 nm und 0,219 nm entsprechen eindeutig den Reflexen (200, 022)-, (-121, -103)- und (031)- von $\beta$-Ca$_2$SiO$_4$. Die Intensität dieser Reflexe ist umso höher, je größer der Zwischenprodukt-Gehalt im Ausgangsgemisch war.

**Thermogravimetrie und DTA**

Wie im Ausführungsbeispiel 1 zeigen die thermogravimetrischen Untersuchungen große Unterschiede im thermischen Verhalten des Zwischenprodukts bzw. den Produkten des Mahlprozesses.

Der Hauptgewichtsverlust des Zwischenproduktes zwischen 400 °C und 600 °C entspricht der Entwässerung von $\alpha$-C$_2$SH. Die Mahlprodukte zeigen dagegen einen verminderten Gewichtsverlust in diesem Temperaturbereich, zum einen wegen der Verminderung des $\alpha$-C$_2$SH Anteils, zum anderem wegen einer partiellen Entwässerung während des Mahlens.

Ähnlich wie in Ausführungsbeispiel 1 ist eine Verlagerung des Gewichtsverlustes der Produkte zu niedrigeren Temperaturen in den Bereich oberhalb von 100 °C sichtbar. Dieses spricht für eine Umstrukturierung des Wassergehalts (OH-Gruppen) von $\alpha$-C$_2$SH als Folge des Mahlens. Der gesamte Gewichtsverlust vermindert sich von 11,1 % im Zwischenprodukt, über 7,9 % im Produkt P 50/50, 6 % im Produkt P 70/30 bis 4,3 % im Produkt P 85/15.

Dieses Ergebnis zeigt, dass eine partielle Entwässerung als Folge des Mahlprozesses stattfindet. Diese führt zu einer vollständigen Umwandlung von $\alpha$-C$_2$SH in $\beta$-C$_2$S. Ein Vergleich der entsprechenden Daten aus den Differenzthermoanalysen zeigt, dass die Temperatur der vollständigen Umwandlung in Dicalcium-silikat eine Funktion der Mahldauer darstellt. So liegt diese Temperatur für das Zwischenprodukt bei 640 °C und sinkt bei den gemahlenen Produkten auf 590 °C.

**Infrarotspektroskopie**

Das IR-Spektrum des Zwischenprodukts ist durch die für $\alpha$-C$_2$SH typischen Banden bei 754 cm$^{-1}$ (Si-O (H)-Streckschwingungen), 985 cm$^{-1}$ (Si-O-Streckschwingungen), 1270 cm$^{-1}$ ($\delta$-OH(Si)-Biegeschwingung), sowie 3540 cm$^{-1}$(OH(Ca)-Streckschwingung) geprägt.

**Fig. 5** zeigt die IR-Spektren des Vorprodukts A und der gemahlenen Produkte P 50/50, P 70/30 und P 85/15 im Bereich von 730 bis 1070 cm$^{-1}$, d.h. im Bereich der Si-O-Streckschwingungen. Zusätzlich ist das IR-Spektrum von reinem Belit $\beta$-C$_2$S dargestellt. Die mit einem Q gekennzeichneten Banden werden Quarz zugeordnet.

Die IR-Spektren der Produkte zeichnen sich durch mit der Mahldauer schwächere $\alpha$-C$_2$SH-Banden aus. Insbesondere betrifft diese Intensitätsabnahme die Banden mit einer Protonbeteiligung, z.B. die $\nu_1$-[Si-O(H)] Streckschwingung bei 760 cm$^{-1}$. Darüber hinaus sind die Banden bei 860 cm$^{-1}$, 945 cm$^{-1}$ und 985 cm$^{-1}$ (Si-O-Streckschwingungen) durch das Mahlen deutlich verbreitert. Zusätzlich ist eine erhöhte Absorption bei 840 cm$^{-1}$ und im Bereich 870 bis 940 cm$^{-1}$ vorhanden, die in **Fig. 5** mit nach oben ausgerichteten Pfeilen gekennzeichnet ist. Dies deutet auf die Entstehung von $\beta$-C$_2$S hin. Nach dem Mahlen ist eine verstärkte Absorption zwischen 3200 und 3750 cm$^{-1}$ vorhanden, was auf eine Umstrukturierung der OH-Gruppen des $\alpha$-C$_2$SH und daraus entstehende, schwächer gebundene Silanol-Gruppen und molekulares H$_2$O zurückzuführen ist.

Nach Mischen mit Wasser und Hydratation des erfindungsgemäßen hydraulischen Bindemittels wurde eine deutliche Ausbildung der C-S-H-Hauptbande um 1000 cm$^{-1}$ beobachtet.

**Hydraulische Reaktivität**

Alle in den Ausführungsbeispielen hergestellten Produkte wurden in einem Wärmeflusskalorimeter auf ihre hydraulische Reaktivität untersucht. Beim Anmachen einer Probe mit Wasser und der Aufzeichnung der freigesetzten oder verbrauchten Enthalpie (Wärme) zeigte sich nach einigen Minuten bis Stunden eine Reaktion, die sich durch die Zusammensetzung des erfindungsgemäßen hydraulischen Bindemittels, durch Variation der Verfahrensparameter (z. B. Mahldauer) oder durch herkömmliche Verzögerer bzw. Beschleuniger, wie sie auch in Portlandzementen zum Einsatz kommen, verzögern bzw. beschleunigen lässt. Obwohl die unbeeinflusste Reaktion mit einer geringeren Wärmefreisetzung verbunden ist als die Reaktion bei Portlandzementen, d.h. weniger heftig abläuft, werden dennoch bereits nach einigen Stunden erhebliche Festigkeiten erreicht.

**Patentansprüche**

1. Verfahren zur Herstellung eines belithaltigen Bindemittels, umfassend die Schritte:

   a) Bereitstellen eines Ausgangsmaterials, das Calcium-(Ca-), Silizium- (Si-) und Sauerstoff-Atome enthält, oder eines Ausgangsmaterials, das Calcium- (Ca-), Silizium- (Si-) und Sauerstoff-Atome enthält, bei dem bis zu 50 % der Silizium-Atome durch Aluminium-(Al-) Atome ersetzt sind, die in einem molaren Verhältnis

$$Ca/(Si + Al),$$

   bei dessen Ermittlung nur die bei der hydrothermalen Behandlung in Lösung gehenden Anteile an Kalk CaCO$_3$, Calciumsulfit CaSO$_3$ und Calciumsulfat CaSO$_4$ berücksichtigt werden, von 1,5:1 bis 2,5:1 zueinander stehen,
   b) Versetzen des Ausgangsmaterials mit Wasser und hydrothermales Behandeln des mit Wasser versetzten Ausgangsmaterials bei einer Temperatur von 120°C bis 250 °C, wodurch sich das Ausgangsmaterial überwiegend in ein Zwischenprodukt umwandelt,
   c) Reaktionsmahlen des Zwischenprodukts bei einer Temperatur von 100°C bis 200 °C über einen Zeitraum von 5 Minuten bis 30 Minuten pur oder gemeinsam mit anderen silikathaltigen Materialien in einer Mühle, wobei unter Reaktion und Entwässerung zumindest teilweise das belithaltige Bindemittel gebildet wird.

2. Verfahren nach Anspruch 1, worin bis zu 33 % der Silizium-Atome durch Aluminium-Atome ersetzt sind.

3. Verfahren nach Anspruch 1 oder 2, worin das in Schritt a) bereitgestellte Ausgangsmaterial ein molares Verhältnis Ca/(Si + Al) von 2,1:1 bis 1,9:1 aufweist.

4. Verfahren nach einem der Ansprüche 1 bis 3, worin die hydrothermale Behandlung des mit Wasser versetzten Ausgangsmaterials in Schritt b) bei einer Temperatur zwischen 150°C und 200 °C erfolgt.

5. Verfahren nach einem der Ansprüche 1 bis 4, worin das Reaktionsmahlen des Zwischenprodukts in Schritt c) bei einer Temperatur von 120 °C bis 150 °C erfolgt.

6. Verfahren nach einem der Ansprüche 1 bis 5, worin das erhaltene Produkt im Anschluss an Schritt c) einer thermischen Behandlung zwischen 300°C und 600 °C unterzogen wird.

**7.** Verfahren nach Anspruch 6, worin das erhaltene Produkt im Anschluss an Schritt c) einer thermischen Behandlung zwischen 350°C und 520 °C unterzogen wird.

**Claims**

**1.** A method for producing a binding agent containing belite, comprising the following steps:

a) provision of a starting material which contains calcium (Ca), silicon (Si) and oxygen atoms, or of a starting material which contains calcium (Ca), silicon (Si) and oxygen atoms where up to 50 % of the silicon atoms are replaced by aluminium (Al) atoms at a molar ratio

$$Ca/ (Si + Al),$$

of 1.5:1-2.5:1, only those proportions of lime $CaCO_3$, calcium sulphite $CaSO_3$ and calcium sulphate $CaSO4$ which are dissolved during hydrothermal treatment being taken into account when the ratio is determined,
b) mixing of the starting material with water and hydrothermal treatment of the starting material mixed with water at a temperature of 120 °C to 250 °C, the starting material being largely converted to an intermediate product,
c) reaction grinding of the intermediate product at a temperature of 100 °C to 200 °C for a period of 5 to 30 minutes alone or together with other silica-containing materials in a mill, with the belite-containing binder being at least partly formed during reaction and dewatering.

**2.** The method of claim 1 wherein up to 33 % of the silicon atoms are replaced by aluminium atoms.

**3.** The method of claim 1 or 2 wherein the starting material provided in step a) exhibits a molar ratio Ca/(Si + Al) of 2.1:1 to 1.9:1.

**4.** The method of any one of claims 1 to 3 wherein the hydrothermal treatment of the starting material mixed with water in step b) takes place as a temperature between 150 °C and 200 °C.

**5.** The method of any one of claims 1 to 4 wherein the reaction grinding of the intermediate product in step c) takes place at a temperature of 120 °C to 150 °C.

**6.** The method of any one of claims 1 to 5 wherein the product obtained at the end of step c) undergoes a thermal treatment at between 300 °C and 600 °C.

**7.** The method of claim 6 wherein the product obtained at the end of step c) undergoes a thermal treatment between 350 °C and 520 °C.

**Revendications**

**1.** Procédé d'obtention d'un liant renfermant de la bélite comprenant les étapes consistant à :

a) préparer un matériau de départ qui renferme des atomes de calcium (Ca), de silicium (Si) et d'oxygène ou un matériau de départ qui renferme des atomes de calcium (Ca), de silicium (Si) et d'oxygène dans lequel jusqu'à 50 % des atomes de silicium sont remplacés par des atomes d'aluminium (Al) qui sont présents dans un rapport moléculaire Ca/(Si + Al) de 1,5 : 1 à 2,5 : 1, pour la détermination duquel seuls sont pris en considération les pourcentages de carbonate de calcium $CaCO_3$, de sulfite de calcium $CaSO_3$ et de sulfate de calcium $CaS_4$ se solubilisant lors du traitement hydrothermique,
b) mélange du matériau de départ avec de l'eau et traitement hydrothermique du matériau de départ mélangé à de l'eau à une température de 120 à 250°C, le matériau de départ se transformant alors principalement en un produit intermédiaire,
c) broyage réactionnel du produit intermédiaire à une température de 100°C à 200°C pendant une durée de 5 minutes à 30 minutes, pur, ou avec d'autres matériaux renfermant des silicates dans un broyeur, lors de la réaction et de la déshydratation le liant renfermant de la bélite étant au moins en partie formé.

**2.** Procédé conforme à la revendication 1, selon lequel jusqu'à 33 % des atomes de silicium sont remplacés par des atomes aluminium.

**3.** Procédé conforme à la revendication 1 ou 2, selon lequel le matériau de départ préparé lors de l'étape a) présente un rapport molaire Ca/(Si + Al) de 2,1 : 1 à 1,9 : 1.

**4.** Procédé conforme à l'une des revendications 1 à 3, selon lequel le traitement hydrothermique du matériau de départ mélangé à de l'eau dans l'étape b) est effectué à une température comprise entre 150°C et 200°C.

**5.** Procédé conforme à l'une des revendications 1 à 4, selon lequel le broyage réactionnel du produit intermédiaire dans l'étape c) est effectué à une température de 120°C à 150°C.

**6.** Procédé conforme à l'une des revendications 1 à 5, selon lequel le produit obtenu à l'issue de l'étape c) est soumis à un traitement thermique entre 300°C et 600°C.

**7.** Procédé conforme à la revendication 6, selon lequel le produit obtenu à l'issue de l'étape c) est soumis à un traitement thermique entre 350 et 520°C.

## Fig. 1

46-1212 (*) - α - Al$_2$O$_3$

82-1211 (C) - α-C$_2$SH - Ca$_2$(SiO$_3$OH)(OH)

83-0461 (A) - β - Ca$_2$(SiO$_4$)

46-1045 (*) - Quarz, syn - SiO$_2$

44-1481 (C) - Ca(OH)$_2$

46-1285 (I) - Jaffeit Ca$_6$Si$_2$O$_7$(OH)$_6$

Fig. 2

EP 2 243 754 B1

Fig. 3

EP 2 243 754 B1

Fig. 4

Fig. 5

EP 2 243 754 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007017142 A

- DE 102005037771 B4


**In der Beschreibung aufgeführte Nicht-Patentliteratur**

- Struktur, Eigenschaften und quantitative Rietveldanalyse von hydrothermal kristallisierten Calciumsilikathydraten (C-S-H-Phasen). **K. GARBEV.** Wiss. Bericht des Forschungszentrums Karlsruhe. 2004, 178-87
- **H. ISHIDA ; S. YAMAZAKI ; K. SASAKI ; Y. OKADA ; T. MITSUDA.** α-Dicalcium Silicate Hydrate: Preparation, Decomposed Phase, and Its Hydration. *J. Am. Ceram. Soc.,* 1993, vol. 76, 1707-1712

- **K. GARBEV ; B. GASHAROVA ; G. BEUCHLE ; S. KREISZ ; P. STEMMERMANN.** *J. Am. Ceram. Soc.,* 2008, vol. 91, 263-271
- Obwohl nach Heegn, Mühlen als Mechanoreaktoren. *Chemie Ingenieur Technik,* 2001, vol. 73, 1529